# EUROPEAN PATENT APPLICATION

(11) **EP 4 848 257 A1**
(43) Date of publication of application: **02.12.2026**
(21) Application number: 26172880.2
(22) Date of filing: 16.04.2026
(51) Int. Cl.: G09B 19/24, G06Q 10/0639, G09B 5/06

(54) **OPERATION ASSISTANCE SYSTEM, OPERATION ASSISTANCE METHOD AND OPERATION ASSISTANCE PROGRAM**

(30) Priority: 28.05.2025 JP 2025088959
(71) Applicant: OMRON Corporation, Kyoto-shi, Kyoto 600-8530 (JP)
(72) Inventor: WU, Xianying, Kyoto-shi, 600-8530 (JP); FUJIMOTO, Shinya, Kyoto-shi, 600-8530 (JP)
(74) Representative: Mewburn Ellis LLP

(57) **Abstract**

An operation assistance system includes: an operation video acquisition unit (110) configured to acquire a plurality of operation videos about an operation process of an operator; an operation element division unit (112) configured to divide each of the plurality of acquired operation videos into a plurality of operation element videos for each operation element included in the operation process; an operation element video selection unit (111) configured to select one of the plurality of divided operation element videos for each operation element; and an operation assistance video generation unit (113) configured to combine the selected operation element videos for each operation element and generate an operation assistance video for the operation process.

## Description

### CROSS REFERENCE TO RELATED APPLICATIONS

This nonprovisional application is based on Japanese Patent Application No. 2025-088959 filed on May 28, 2025 with the Japan Patent Office, the entire contents of which are hereby incorporated by reference.

### BACKGROUND OF THE INVENTION

### Field of the Invention

The present disclosure relates to an operation assistance system, an operation assistance method and an operation assistance program that assist an operation of an operator.

### Description of the Background Art

Generally, an operation manual indicating an operation procedure is created in an operation process at a production site of a product or an operation process at the time of maintenance or introduction of a product. An operator who performs an operation for the first time learns the operation procedure while referring to the operation manual. Not only an operation manual in document format but also an operation manual in video format is used as the operation manual. The operation manual in video format is created by capturing images of an operation process performed by an expert having a sufficient understanding of an operation procedure.

Skill transfer of an operation at a production site has been a long-standing issue and hands-on teaching of an operation from an expert to a beginner is required. However, there are tips and know-how of which even experts are unaware, and collection of these tips and know-how becomes an issue. For example, in this respect, a system that determines an operation process including tacit information such as tips and know-how based on an overall operation time difference is proposed (refer to Japanese Patent No. 7091886).

### SUMMARY OF THE INVENTION

An operation process may include a plurality of operation elements and even experts may perform the respective operation elements differently. This may also include tips and know-how of which even experts are unaware. Therefore, if these are selectable, an operation manual suitable for operation assistance can be generated.

The present disclosure has been made to solve the above-described problem and provides an operation assistance system, an operation assistance method and an operation assistance program that enable generation of an operation manual suitable for operation assistance.

An operation assistance system according to an example of the present disclosure includes: an operation video acquisition unit configured to acquire a plurality of operation videos about an operation process of an operator; an operation element division unit configured to divide each of the plurality of acquired operation videos into a plurality of operation element videos for each operation element included in the operation process; an operation element video selection unit configured to select one of the plurality of divided operation element videos for each operation element; and an operation assistance video generation unit configured to combine the selected operation element videos for the respective operation elements and generate an operation assistance video for the operation process. According to this configuration, since the operation assistance video is generated by selecting and combining the operation element videos for the respective operation elements, an operation manual suitable for operation assistance can be generated.

The operation assistance system further includes a comparison unit configured to compare the plurality of divided operation element videos for each operation element. According to this configuration, the comparison makes it easier to select the operation element video for each operation element.

The operation element video selection unit is configured to select one of the plurality of operation element videos based on a result of comparison by the comparison unit. According to this configuration, since the operation element video for each operation element is selected based on the result of comparison, the suitable operation element video can be selected.

The operation element video selection unit includes an acceptance unit configured to accept selection of one of the plurality of operation element videos based on the result of comparison by the comparison unit. According to this configuration, since the acceptance unit configured to accept selection is provided, the operation element video can be selected based on the user's intention, which enhances user convenience.

The comparison unit is configured to play back and compare the plurality of divided operation element videos for each operation element. According to this configuration, the playback and comparison make it easier to select the operation element video for each operation element.

The comparison unit is configured to simultaneously play back and compare the plurality of divided operation element videos for each operation element. According to this configuration, the simultaneous playback and comparison make a difference between the operation element videos clearer and make selection easier.

In the operation assistance system, the operation video and a skill level of the operator are associated with each other, and the operation element video selection unit is configured to select one of the plurality of operation element videos in accordance with the skill level. According to this configuration, since the operation element video is selected in accordance with the skill level, the operation assistance video can be generated in accordance with the skill level.

The operation assistance system further includes a comment addition unit configured to add a comment to the divided operation element video. According to this configuration, since the comment is added, improved support for the operation assistance video is achieved.

The comment addition unit is provided to be capable of adding a plurality of comments in accordance with a skill level of the operator, and the comment addition unit further includes a comment display switching unit configured to be capable of switching between display and non-display of each of the comments in the operation element video. According to this configuration, since switching between display and non-display of each comment can be performed, the operation assistance video can be played back in accordance with the user's skill level.

The operation element video selection unit includes a selection acceptance unit provided to be capable of accepting selection of one of the plurality of operation element videos. According to this configuration, since the selection acceptance unit configured to accept selection of the operation element video is provided, the operation element video can be selected based on the user's intention, which enhances user convenience.

The operation element video selection unit further includes a switching selection acceptance unit provided to be capable of accepting selection of an operation element video for switching, of the plurality of operation element videos. According to this configuration, since the switching selection acceptance unit configured to accept selection of the operation element video for switching, together with selection of the operation element video, is provided, the operation element video can be switched based on the user's intention, which enhances user convenience.

The operation assistance system further includes: a video playback unit configured to play back the operation assistance video; and a switching playback unit configured to switch to and play back the operation element video for switching selected by the switching selection acceptance unit, in accordance with an instruction, when the operation assistance video is played back. According to this configuration, it is possible to switch to, play back and display the operation element video for switching, which enhances user convenience.

An operation assistance method according to an example of the present disclosure includes: acquiring a plurality of operation videos about an operation process of an operator; dividing each of the plurality of acquired operation videos into a plurality of operation element videos for each operation element included in the operation process; selecting one of the plurality of divided operation element videos for each operation element; and combining the selected operation element videos for the respective operation elements and generating an operation assistance video for the operation process. According to this configuration, since the operation assistance video is generated by selecting and combining the operation element videos for the respective operation elements, an operation manual suitable for operation assistance can be generated.

An operation assistance program according to an example of the present disclosure is an operation assistance program that causes a computer to perform an operation assistance method, the operation assistance program including: acquiring a plurality of operation videos about an operation process of an operator; dividing each of the plurality of acquired operation videos into a plurality of operation element videos for each operation element included in the operation process; selecting one of the plurality of divided operation element videos for each operation element; and combining the selected operation element videos for the respective operation elements and generating an operation assistance video for the operation process. According to this configuration, since the operation assistance video is generated by selecting and combining the operation element videos for the respective operation elements, an operation manual suitable for operation assistance can be generated.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 illustrates a configuration of an operation assistance system 1 according to a first embodiment.
Fig. 2 illustrates a configuration of a server 20 according to the first embodiment.
Fig. 3 illustrates functional blocks of a processor 100 of server 20 according to the first embodiment.
Fig. 4 is a flowchart illustrating a process of server 20 according to the first embodiment.
Fig. 5 illustrates an overview of generation of an operation assistance video according to the first embodiment.
Fig. 6 illustrates an operation element list according to the first embodiment.
Fig. 7 illustrates an operation element video editing screen 300 according to the first embodiment.
Fig. 8 illustrates a comparison playback screen 400 according to the first embodiment.
Fig. 9 illustrates an operation element determination list according to the first embodiment.
Fig. 10 illustrates a playback screen 500 according to the first embodiment.
Fig. 11 illustrates functional blocks of a processor 101 of server 20 according to a second embodiment.
Fig. 12 illustrates an operation element video editing screen 301 according to the second embodiment.
Fig. 13 illustrates an operation element determination list according to the second embodiment.
Fig. 14 illustrates a playback screen 501 according to the second embodiment.
Fig. 15 illustrates functional blocks of a processor 101 # of server 20 according to a third embodiment.
Fig. 16 illustrates an operation element video editing screen 302 according to the third embodiment.
Fig. 17 illustrates a playback screen 503 according to the third embodiment.
Fig. 18 illustrates an operation element video editing screen 304 according to a fourth embodiment.
Fig. 19 illustrates an operation element determination list according to the fourth embodiment.

### DESCRIPTION OF THE PREFERRED EMBODIMENTS

Embodiments of the present disclosure will be described in detail with reference to the drawings. The same or corresponding portions in the drawings are denoted by the same reference characters and description thereof will not be repeated.

### (First Embodiment)

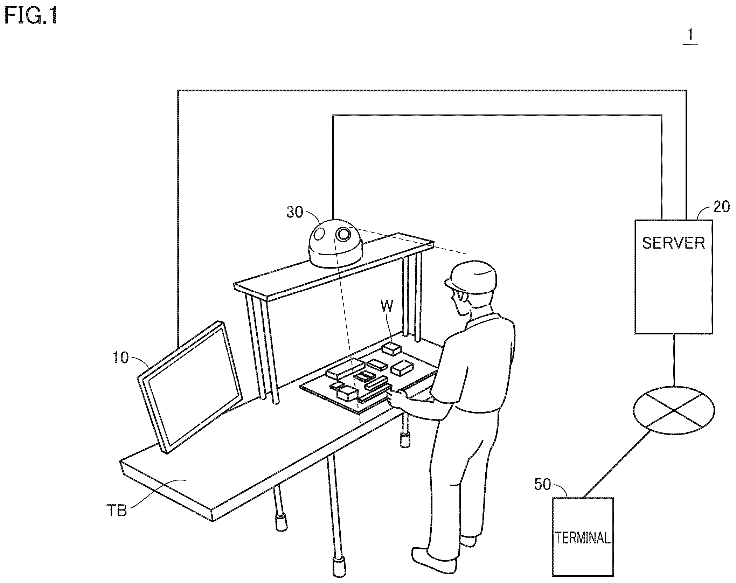

Fig. 1 illustrates a configuration of an operation assistance system 1 according to a first embodiment. Referring to Fig. 1, operation assistance system 1 includes a display 10, a server 20, a camera 30, and a terminal 50 connected to server 20 through a network. Each of display 10 and camera 30 is connected to server 20. An operation process of an operator includes, for example, a hole drilling process, an assembly process, a conveyance process, and the like. In the present example, the case in which the operator performs a product assembly process using a workpiece W arranged on a workbench TB is described as an example of the operation process. As an example, the assembly process is a process of assembling a product by performing slider attachment, screw tightening, and cover attachment in this order. The operator performs screw tightening and the like by using, for example, a not-shown driver.

As an example, display 10 is placed on a part of workbench TB. Display 10 outputs information about a predetermined operation. In the present example, the information about the predetermined operation includes, for example, operation assistance information for operation assistance. Camera 30 captures images of a predetermined operation state of the operator and outputs the captured image data to server 20 as an operation video.

Server 20 acquires, as an operation video, the captured image data input through camera 30, and generates an operation assistance video, which is an operation manual, based on the acquired operation video. Server 20 plays back the generated operation assistance video for the operator and causes display 10 to display the operation assistance video. In the present example, the case in which the operator performs the assembly process is described as an example. Without being limited as such, the operator may perform another process. For example, the operator may perform the hole drilling process or the conveyance process.

In the present example, the case in which display 10 is used as an example of a display device to output the information about the predetermined operation is described as an example. Without being limited as such, a method for projecting (outputting) the information onto a predetermined projection area by using a projector may be adopted. Further, the information about the predetermined operation may be presented to the operator by using, for example, a speaker. Further, the speaker and display 10 may be used in combination.

Terminal 50 is connected to server 20 through the network and an editing screen in generation of the operation assistance video in server 20 is displayed on terminal 50. In the present example, the case in which a manager generates the operation assistance video through terminal 50 is described. Without being limited as such, the manager may, for example, directly operate server 20 and generate the operation assistance video.

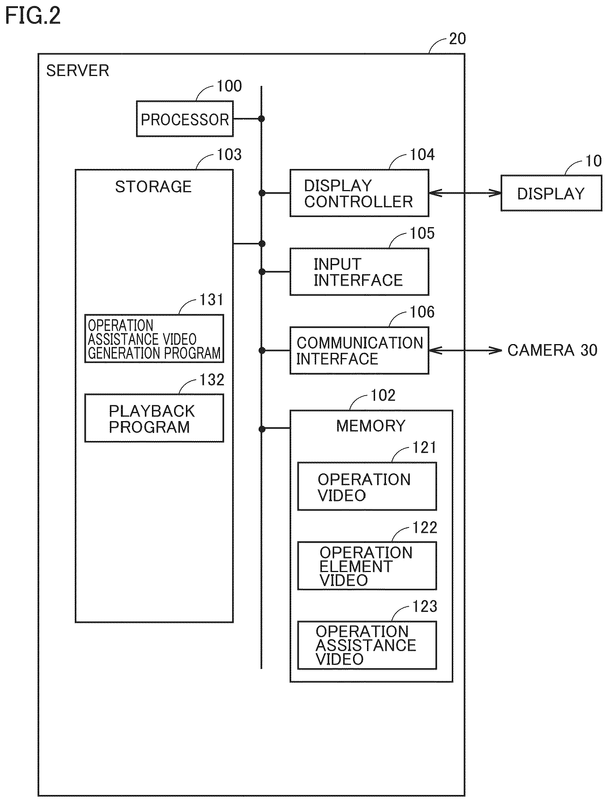

Fig. 2 illustrates a configuration of server 20 according to the first embodiment. Referring to Fig. 2, server 20 typically has a structure conforming to a general-purpose computer architecture. Specifically, server 20 includes a processor 100 such as a central processing unit (CPU) or a micro-processing unit (MPU), a memory 102, a storage 103, a display controller 104, an input interface 105, and a communication interface 106. These components are interconnected via a bus to be able to communicate data with one another. Processor 100 implements a variety of types of processes according to the present embodiment by loading a variety of types of programs stored in storage 103 into memory 102 and executing the programs. Memory 102 is typically a volatile storage device such as a dynamic random access memory (DRAM), and stores a program read from storage 103, and the like. Storage 103 is typically a non-volatile magnetic storage device such as a hard disk drive. Storage 103 stores an operation assistance video generation program 131 and a playback program 132 executed by processor 100. Memory 102 stores an operation video 121, an operation element video 122 and an operation assistance video 123. Storage 103 may store operation video 121, operation element video 122 and operation assistance video 123.

Operation assistance video generation program 131 is a program for generating an operation assistance video for an operation process to assist an operation of an operator. Playback program 132 is a program for playing back and displaying the generated operation assistance video to assist the operator.

Operation video 121 is image data about an operation process of an operator transmitted from camera 30 through communication interface 106.

Operation element video 122 is image data obtained by dividing an operation video for each operation element included in an operation process based on an operation recognition technique compliant with operation assistance video generation program 131.

Operation assistance video 123 is image data for operation assistance to an operation process generated by combining operation element videos selected for a plurality of divided operation element videos for each operation element.

A variety of types of programs installed in storage 103 are distributed in a state of being stored in a memory card or the like. Display controller 104 is connected to display 10, and, in response to an internal command received from processor 100, outputs a signal to display 10 for displaying a variety of types of information. Input interface 105 may mediate data transmission from an input device such as a keyboard, a mouse, a touch panel, or a dedicated console, although not shown. Communication interface 106 mediates data transmission between processor 100 and an external device (e.g., camera 30). Communication interface 106 typically includes Ethernet (registered trademark), a universal serial bus (USB), or the like. Note that a variety of types of programs stored in storage 103 may be downloaded from a distribution server or the like via communication interface 106.

When a computer having a structure conforming to a general-purpose computer architecture, as described above, is used, an operating system (OS) for providing basic functions for the computer may be installed in addition to an application for providing functions according to the present embodiment. In this case, a program according to the present embodiment may invoke necessary ones of program modules that are provided as a part of the OS in a predetermined order at a predetermined timing and perform processing. That is, the program per se according to the present embodiment may not include the above-described modules, and instead cooperate with the OS to perform the processing. Alternatively, functions provided by executing operation assistance video generation program 131 and playback program 132 may be partially or entirely implemented as dedicated hardware circuitry.

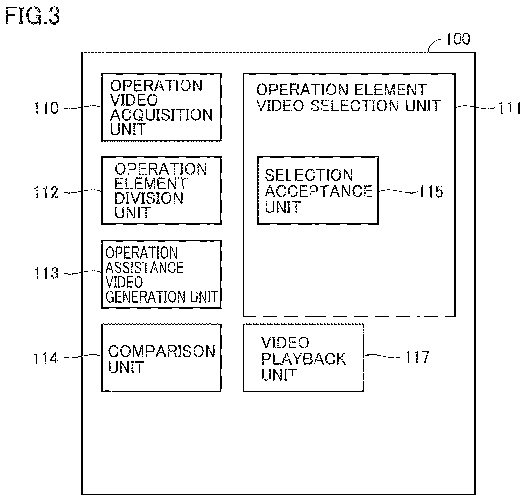

Fig. 3 illustrates functional blocks of processor 100 of server 20 according to the first embodiment. Referring to Fig. 3, processor 100 includes an operation video acquisition unit 110, an operation element video selection unit 111, an operation element division unit 112, an operation assistance video generation unit 113, a comparison unit 114, and a video playback unit 117. Operation video acquisition unit 110, operation element video selection unit 111, operation element division unit 112, operation assistance video generation unit 113, and comparison unit 114 are implemented by execution of operation assistance video generation program 131 by processor 100. Video playback unit 117 is implemented by execution of playback program 132 by processor 100.

Operation video acquisition unit 110 acquires an operation video about an operation process of an operator. Specifically, operation video acquisition unit 110 acquires image data about the operation process of the operator from camera 30 and stores the image data in memory 102 as operation video 121.

Operation element video selection unit 111 selects an operation element video for each operation element included in the operation process of the operator, in accordance with an input of the manager, for example. Operation element video selection unit 111 includes a selection acceptance unit 115 provided to be capable of accepting selection of one of a plurality of operation element videos. Selection acceptance unit 115 may accept selection of one of the plurality of operation element videos based on a result of comparison by comparison unit 114. In the present example, the case in which the manager selects the operation element video is described as an example. Without being limited as such, operation element video selection unit 111 may select the operation element video based on a result of analysis of the operation element video by comparison unit 114. For example, operation element video selection unit 111 may select an operation element video that is shortest in time, of the plurality of divided operation element videos. For example, when the operation element video that is short in time, of the plurality of operation element videos, is selected, it can be determined that the operator is likely to have performed the suitable operation. The case of selecting the operation element video based on time is described, for example. Without being limited as such, the operation element video may be selected based on, for example, a skill level.

Operation element division unit 112 analyzes the operation video and divides the operation video for each operation element based on a result of analysis. Although there are various division methods, operation element division unit 112 divides the operation video about the operation process for each operation element using, for example, the operation recognition technique. Operation element division unit 112 divides operation video 121 and stores divided operation element video 122 in memory 102. In this respect, as the operation recognition technique, operation element division unit 112 is trained on the divided operation element video and divides the operation video for each operation element based on a result of training. For example, regarding the assembly process, the operation video may be divided for each of the following operation elements: slider attachment; screw tightening; and cover attachment. More specifically, a plurality of pieces of video data in which a start point and an end point of slider attachment are specified may be prepared as training data to generate a trained model, and then, an operation element video about slider attachment may be extracted from an operation video using the generated trained model. Similarly, regarding each of screw tightening and cover attachment, an operation element video can also be extracted from an operation video. The use of the operation recognition technique makes it possible to match the start points of the operation elements. For example, operation element division unit 112 may match the start timings of the operation elements using a predetermined action as a trigger.

Operation assistance video generation unit 113 combines the operation element videos selected in accordance with the selection by operation element video selection unit 111 and generates an operation assistance video. Specifically, operation assistance video generation unit 113 combines the plurality of operation element videos selected by selection acceptance unit 115 and generates the operation assistance video.

Comparison unit 114 compares the plurality of operation element videos. For example, comparison unit 114 is provided to be capable of comparing and playing back the plurality of operation element videos. For example, by matching the start timings as described above at the time of comparison and playback by comparison unit 114, the plurality of operation element videos can be simultaneously played back and a difference can be easily checked during comparison. Comparison unit 114 may compare time periods of the plurality of operation element videos with one another and output a result of comparison to operation element video selection unit 111. For example, comparison unit 114 may calculate a skill level based on a result of analysis of the operation element videos in accordance with the time periods of the plurality of operation element videos and output the calculated skill level to operation element video selection unit 111.

Video playback unit 117 plays back operation assistance video 123 stored in memory 102 and causes display 10 to display operation assistance video 123.

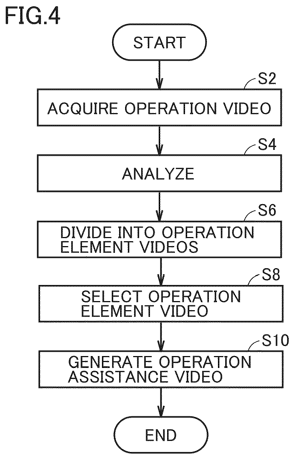

Fig. 4 is a flowchart illustrating a process of server 20 according to the first embodiment. Referring to Fig. 4, server 20 acquires an operation video of an operator (step S2). Specifically, operation video acquisition unit 110 acquires image data about the operation process of the operator from camera 30 and stores the image data in memory 102 as operation video 121. Next, server 20 analyzes operation video 121 stored in memory 102 (step S4). Specifically, operation element division unit 112 analyzes operation video 121 using the operation recognition technique. Next, server 20 divides operation video 121 into operation element videos (step S6). Specifically, operation element division unit 112 stores, in memory 102, operation element videos 122 divided based on a result of analysis. For example, operation element division unit 112 divides operation video 121 into operation element videos about slider attachment, screw tightening, and cover attachment in the assembly process.

Next, server 20 selects operation element video 122 for generating an operation assistance video from among the plurality of operation element videos 122 stored in memory 102 (step S8). Specifically, operation element video selection unit 111 selects an operation element video as a standard operation suitable for an operation element from among the plurality of operation element videos 122 to generate the operation assistance video. For example, operation element video selection unit 111 selects an operation element video as a standard operation from among a plurality of operation element videos about slider attachment. Similarly, operation element video selection unit 111 selects an operation element video as a standard operation from among a plurality of operation element videos about screw tightening. Similarly, operation element video selection unit 111 selects an operation element video as a standard operation from among a plurality of operation element videos about cover attachment. Operation element video selection unit 111 may select an operation element video based on, for example, a result of comparison by comparison unit 114. As an example, operation element video selection unit 111 may select an operation element video by comparing and playing back a plurality of operation element videos as the result of comparison by comparison unit 114.

Next, server 20 combines the selected operation element videos and generates operation assistance video 123 (step S10). Specifically, operation assistance video generation unit 113 generates operation assistance video 123 by combining the operation element videos selected by operation element video selection unit 111.

Then, the process ends (END).

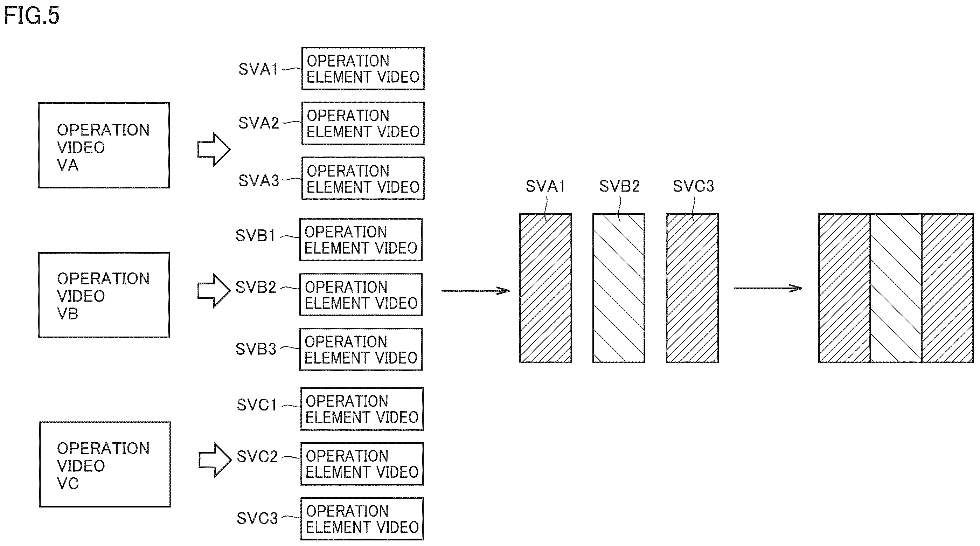

Fig. 5 illustrates an overview of generation of the operation assistance video according to the first embodiment. Referring to Fig. 5, in the present example, the case in which operation videos VA, VB and VC are provided is described.

Operation element division unit 112 divides operation video VA into operation element videos SVA1 to SVA3. Similarly, operation element division unit 112 divides operation video VB into operation element videos SVB1 to SVB3. Similarly, operation element division unit 112 divides operation video VC into operation element videos SVC1 to SVC3.

Operation element video selection unit 111 selects the operation element videos for each operation element from among the plurality of operation element videos SVA1 to SVA3, SVB1 to SVB3 and SVC1 to SVC3. In the present example, the case in which operation element videos SVA1, SVB2 and SVC3 are selected is described as an example.

Operation assistance video generation unit 113 combines operation element videos SVA1, SVB2 and SVC3 and generates the operation assistance video.

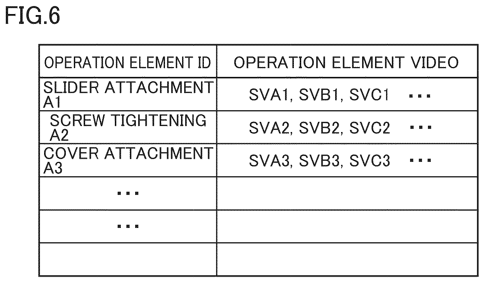

Fig. 6 illustrates an operation element list according to the first embodiment. Referring to Fig. 6, a relationship between an operation element ID and an operation element video is registered in the operation element list. In the present example, operation element videos SVA1, SVB1 and SVC1 are registered in relation to slider attachment A1 as the operation element. Further, operation element videos SVA2, SVB2 and SVC2 are registered in relation to screw tightening A2 as the operation element. Further, operation element videos SVA3, SVB3 and SVC3 are registered in relation to cover attachment A3 as the operation element. As an example, the case in which the three operation element videos are shown as a list is described. Without being limited as such, a greater number of operation element videos may further be registered.

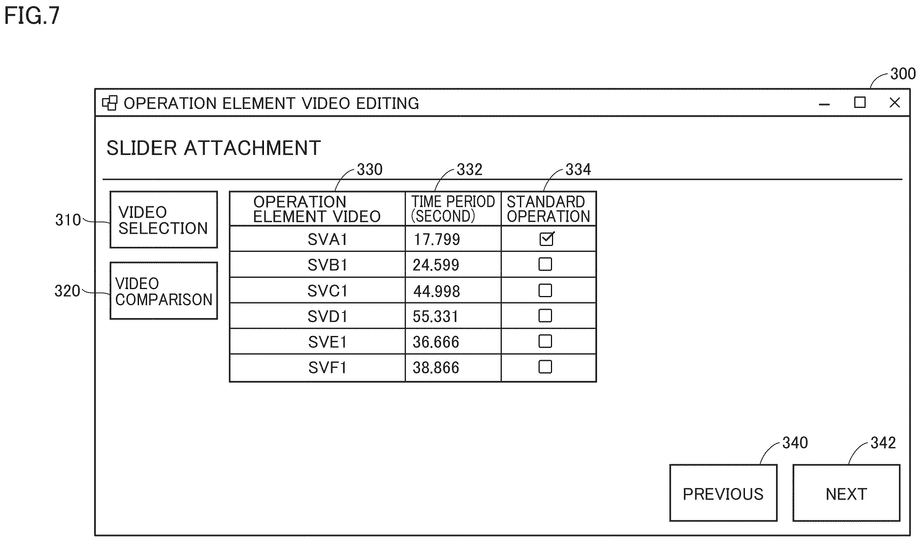

Fig. 7 illustrates an operation element video editing screen 300 according to the first embodiment. Referring to Fig. 7, processor 100 causes a not-shown display of terminal 50 connected through the network to display operation element video editing screen 300 in accordance with operation assistance video generation program 131 in response to a predetermined operational instruction. In the present example, the case in which operation element video editing screen 300 is displayed on the display of terminal 50 is described. However, operation element video editing screen 300 may be displayed on display 10 connected to server 20. Operation element video editing screen 300 includes a video selection button 310, a video comparison button 320, an operation element video list 330, a time period 332, a standard operation checkbox 334, a "next" button 342, and a "previous" button 340. In the present example, an editing screen for selecting the operation element video about slider attachment as the operation element is described.

A plurality of operation element videos and a plurality of time periods are registered in operation element video list 330. Specifically, the operation element video list described with reference to Fig. 6 is shown. In the present example, operation element video SVA1 and a time period "17.799 s" are registered in association with each other, as an example. Similarly, operation element video SVB1 and a time period "24.599 s" are registered in association with each other. Further, operation element video SVC1 and a time period "44.998 s" are registered in association with each other. Further, an operation element video SVD1 and a time period "55.331 s" are registered in association with each other. Further, an operation element video SVE1 and a time period "36.666 s" are registered in association with each other. Further, an operation element video SVF1 and a time period "38.866 s" are registered in association with each other.

Standard operation checkbox 334 for selecting a standard operation element video is provided to correspond to each of operation element videos SVA1 to SVF1. In the present example, the case in which standard operation checkbox 334 for operation element video SVA1 is checked is described. In the present example, the case in which the manager checks the checkbox using a not-shown mouse or the like is described, for example. The checkbox may, for example, be automatically checked based on the length of the time period. For example, standard operation checkbox 334 corresponding to an operation element video that is short in time period of an operation element may be checked.

For example, when "next" button 342 is selected, a next operation element video editing screen may be displayed. For example, an operation element video editing screen about screw tightening may be displayed. When "previous" button 340 is selected on the operation element video editing screen about screw tightening, the operation element video editing screen about slider attachment may be displayed.

Video selection button 310 is a button for determining selection of the operation element video corresponding to checked standard operation checkbox 334. In accordance with selection of video selection button 310, operation element video selection unit 111 selects operation element video SVA1 as the standard operation regarding slider attachment.

Video comparison button 320 is a button pressed when the manager compares the videos. Specifically, in accordance with selection of video comparison button 320, comparison unit 114 displays a comparison playback screen.

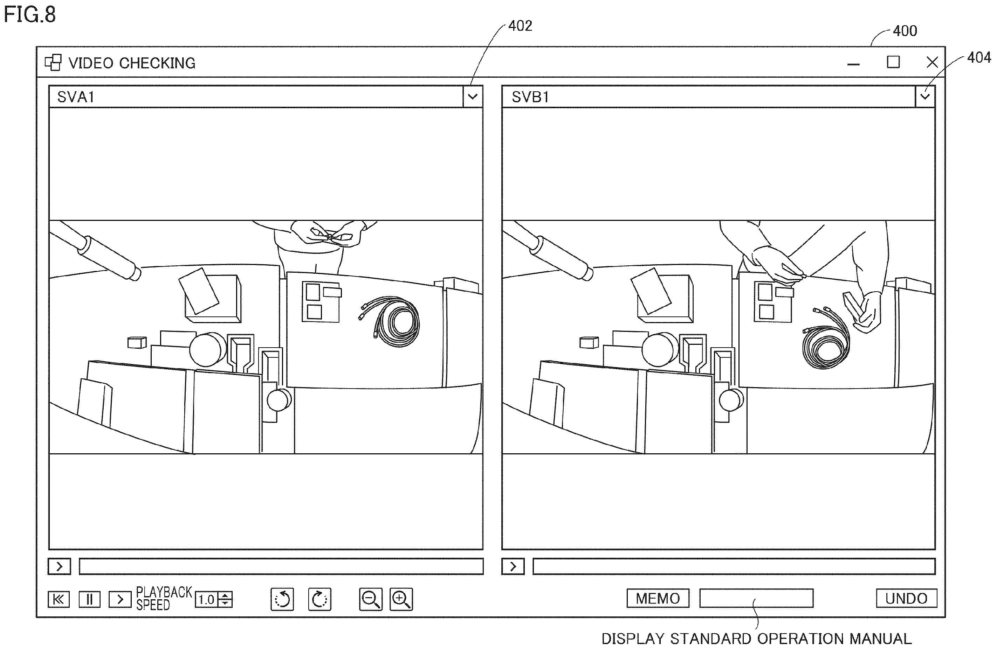

Fig. 8 illustrates a comparison playback screen 400 according to the first embodiment. Referring to Fig. 8, in the present example, comparison playback screen 400 is displayed on the display of terminal 50. Specifically, two operation element videos are arranged in parallel and played back and displayed on comparison playback screen 400. Specifically, operation element video SVA1 and operation element video SVB1 are played back and displayed on the display of terminal 50. By comparing the two operation element videos played back and displayed in parallel, the manager can select a suitable operation element video. For example, by matching the start timings of the operation elements, the manager can easily grasp a difference in operation progress speed. In the present example, the case in which operation element video SVA1 and operation element video SVB1 are selected using drop buttons 402 and 404, respectively, is described. Without being limited as such, other operation element videos may be selected using drop buttons 402 and 404, and played back and displayed for comparison. Further, the number of operation element videos played back and displayed for comparison is not limited to two and a greater number of operation element videos may be played back and displayed for comparison. For example, the operation element videos may be displayed in a four-part split manner.

The use of comparison playback screen 400 makes it possible to compare a plurality of operation element videos and extract tips and know-how of which even experts are unaware, the tips and know-how being a difference between operations.

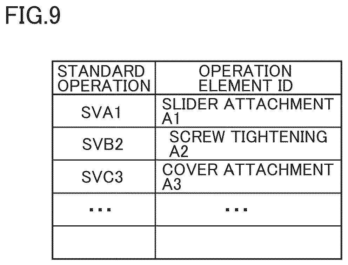

Fig. 9 illustrates an operation element determination list according to the first embodiment. Referring to Fig. 9, the operation element determination list is created by selecting video selection button 310 on the operation element video editing screen in relation to each element.

Specifically, the operation element video selected as the standard operation and the operation element ID are registered in association with each other.

Operation element video SVA1 selected as the standard operation and slider attachment A1 are registered in association with each other. Similarly, operation element video SVB2 selected as the standard operation and screw tightening A2 are registered in association with each other. Similarly, operation element video SVC3 selected as the standard operation and cover attachment A3 are registered in association with each other.

Based on the operation element determination list, operation assistance video generation unit 113 generates operation assistance video 123, which is an operation manual suitable for operation assistance.

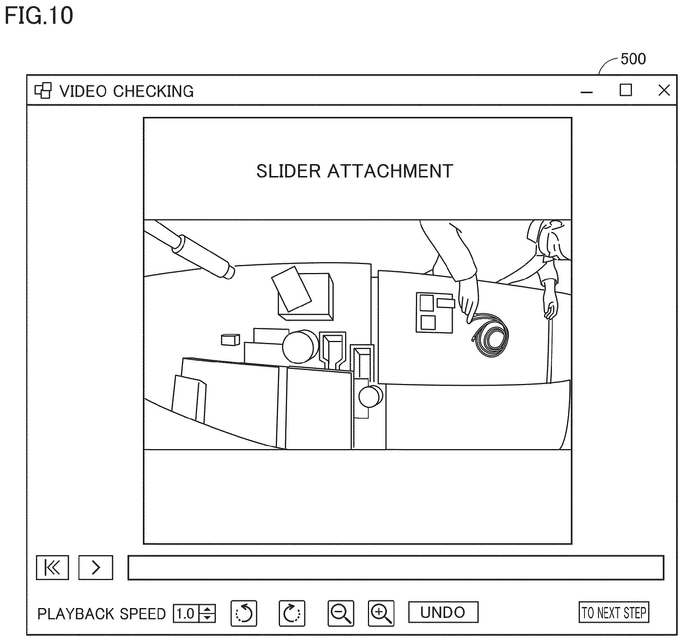

Fig. 10 illustrates a playback screen 500 according to the first embodiment. Referring to Fig. 10, server 20 causes display 10 to play back and display operation assistance video 123 in accordance with playback program 132.

Operation assistance video 123 combined based on the operation element determination list is displayed on playback screen 500. In the present example, the case in which selected operation element video SVA1 incorporated into operation assistance video 123 is displayed is described.

By watching the operation assistance video into which the operation element videos selected as the standard operations are incorporated, the operator can check the suitable video for operation assistance and efficiently perform the operation.

### (Second Embodiment)

In a second embodiment, a method for incorporating a video for switching into an operation assistance video will be described. In the present example, the case in which a video about an abnormal operation is incorporated as the video for switching is described.

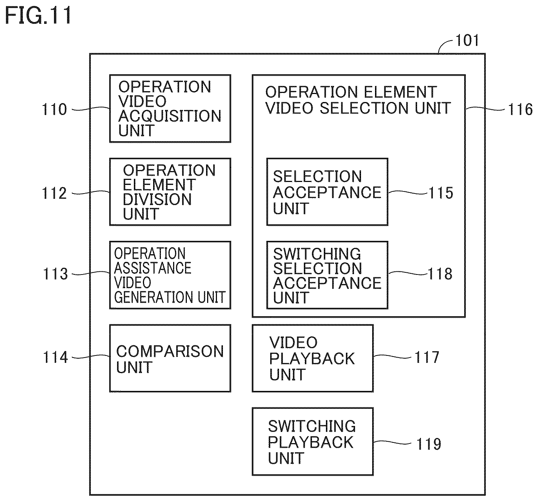

Fig. 11 illustrates functional blocks of a processor 101 of server 20 according to the second embodiment. Referring to Fig. 11, processor 101 according to the second embodiment is different from processor 100 in Fig. 3 in that operation element video selection unit 111 is replaced by an operation element video selection unit 116 and a switching playback unit 119 is added. Operation element video selection unit 116 is different from operation element video selection unit 111 in that a switching selection acceptance unit 118 is further added. Since the remaining configuration is the same as that described with reference to Fig. 3, detailed description thereof will not be repeated.

Switching selection acceptance unit 118 accepts selection of an operation element video for switching, of a plurality of operation element videos. Switching selection acceptance unit 118 may accept selection of one of the plurality of operation element videos based on a result of comparison by comparison unit 114. In the present example, the case in which the manager selects the operation element video is described as an example. Without being limited as such, the operation element video may be selected based on a result of analysis of the operation element video by comparison unit 114. Operation element video selection unit 111 may select an operation element video that is longest in time, of the plurality of divided operation element videos, as the operation element video for switching. For example, when the operation element video that is long in time, of the plurality of operation element videos, is selected, it can be determined that the operator is likely to have performed the abnormal operation. The case of selecting the operation element video based on time is described, for example. Without being limited as such, the operation element video may be selected based on, for example, a skill level.

Operation assistance video generation unit 113 combines the operation element videos selected in accordance with selection by operation element video selection unit 111 and generates the operation assistance video. Specifically, operation assistance video generation unit 113 combines the plurality of operation element videos selected by selection acceptance unit 115 and generates the operation assistance video. Further, the operation assistance video also includes the operation element video for switching associated with the operation element video selected by switching selection acceptance unit 118. As described below, during playback of the operation assistance video, switching from the selected operation element video to the operation element video for switching can be performed in accordance with an instruction of the operator.

Switching playback unit 119 switches the selected operation element video that is being played back to another operation element video associated therewith, and causes display 10 to display the other operation element video, in accordance with an instruction of the operator.

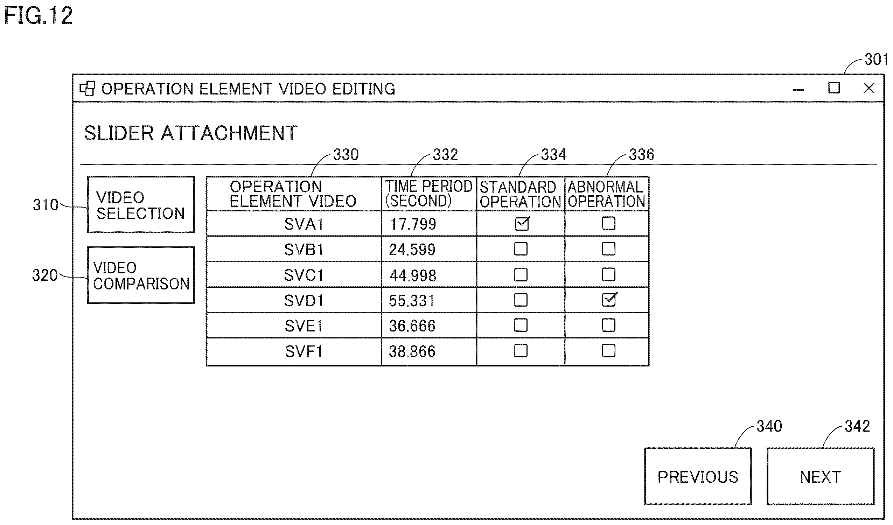

Fig. 12 illustrates an operation element video editing screen 301 according to the second embodiment. Referring to Fig. 12, processor 101 causes the not-shown display of terminal 50 connected through the network to display operation element video editing screen 301 in accordance with operation assistance video generation program 131 in response to a predetermined operational instruction. Operation element video editing screen 301 is different from operation element video editing screen 300 described with reference to Fig. 7 in that an abnormal operation checkbox 336 is further added. Since the remaining configuration is the same as that described with reference to Fig. 7, detailed description thereof will not be repeated.

Standard operation checkbox 334 for selecting a standard operation element video and abnormal operation checkbox 336 for selecting an abnormal operation element video are provided to correspond to each of operation element videos SVA1 to SVF1. In the present example, the case in which standard operation checkbox 334 for operation element video SVA1 is checked and abnormal operation checkbox 336 for operation element video SVD1 is checked is described. In the present example, the case in which the manager checks the checkboxes using the not-shown mouse or the like is described, for example. The checkboxes may, for example, be automatically checked based on the length of the time period. For example, standard operation checkbox 334 corresponding to an operation element video that is short in time period of an operation element may be checked, and abnormal operation checkbox 336 corresponding to an operation element video that is long in time period of an operation element may be checked.

Video selection button 310 is a button for determining selection of the operation element video corresponding to checked standard operation checkbox 334 and the operation element video corresponding to checked abnormal operation checkbox 336. In accordance with selection of video selection button 310, operation element video selection unit 111 selects operation element video SVA1 as the standard operation and selects operation element video SVD1 as the abnormal operation regarding slider attachment.

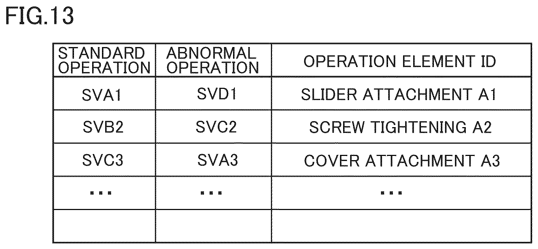

Fig. 13 illustrates an operation element determination list according to the second embodiment. Referring to Fig. 13, the operation element determination list is created by selecting video selection button 310 on the operation element video editing screen in relation to each element.

Specifically, the operation element video selected as the standard operation, the operation element video selected as the abnormal operation, and the operation element ID are registered in association with one another.

Operation element video SVA1 selected as the standard operation, operation element video SVD1 selected as the abnormal operation, and slider attachment A1 are registered in association with one another. Similarly, operation element video SVB2 selected as the standard operation, operation element video SVC2 selected as the abnormal operation, and screw tightening A2 are registered in association with one another. Similarly, operation element video SVC3 selected as the standard operation, operation element video SVA3 selected as the abnormal operation, and cover attachment A3 are registered in association with one another.

Operation assistance video generation unit 113 generates operation assistance video 123 based on the operation element determination list.

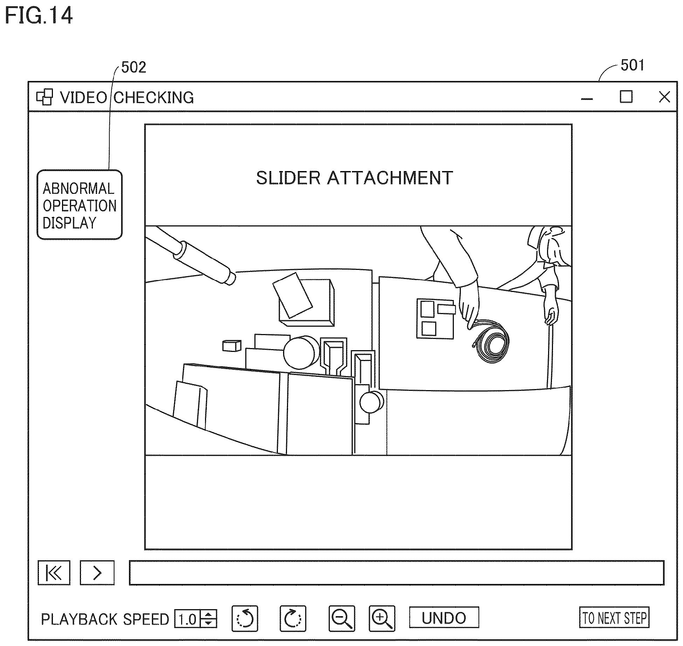

Fig. 14 illustrates a playback screen 501 according to the second embodiment. Referring to Fig. 14, playback screen 501 is different from playback screen 500 described with reference to Fig. 10 in that an abnormal operation display button 502 is provided.

When the operator selects abnormal operation display button 502, switching playback unit 119 switches the playback screen. Specifically, switching playback unit 119 switches the operation element video to operation element video SVD1 selected as the abnormal operation and causes display 10 to play back and display operation element video SVD1. This processing makes it possible to recognize the abnormal operation and easily grasp which operation should be performed with care.

### (Third Embodiment)

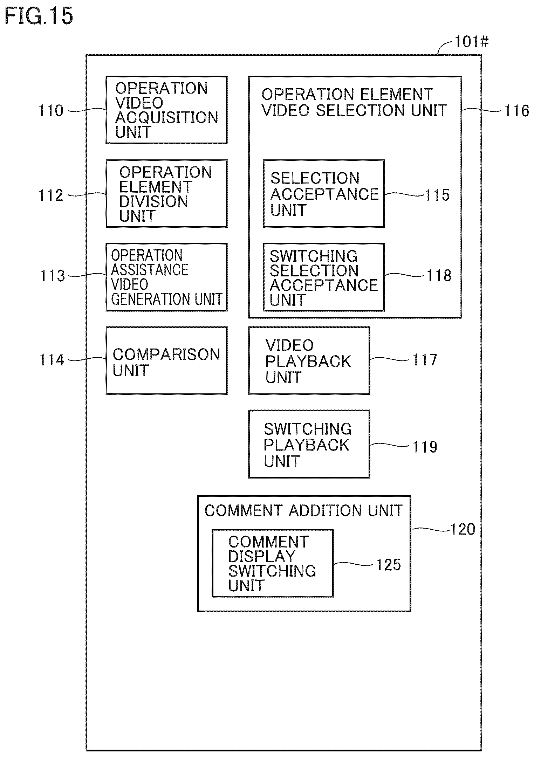

Fig. 15 illustrates functional blocks of a processor 101# of server 20 according to a third embodiment. Referring to Fig. 11, processor 101# according to the third embodiment is different from processor 101 in Fig. 11 in that a comment addition unit 120 is further added. Comment addition unit 120 includes a comment display switching unit 125. Comment addition unit 120 adds a comment that supports an operation process in relation to a divided operation element video. For example, a plurality of operation element videos may be compared using comparison playback screen 400 described above and extracted tips and know-how of which even experts are unaware may be added as a comment. Key points to remember for an operation can also be added as a comment. A comment may be added to an operation element video using generative AI.

In the present example, the case in which the manager adds the comment is described. However, the comment may be automatically added based on analysis of the operation element video.

Comment display switching unit 125 switches display of the commend added to the operation element video. Specifically, comment display switching unit 125 switches between display and non-display of the comment.

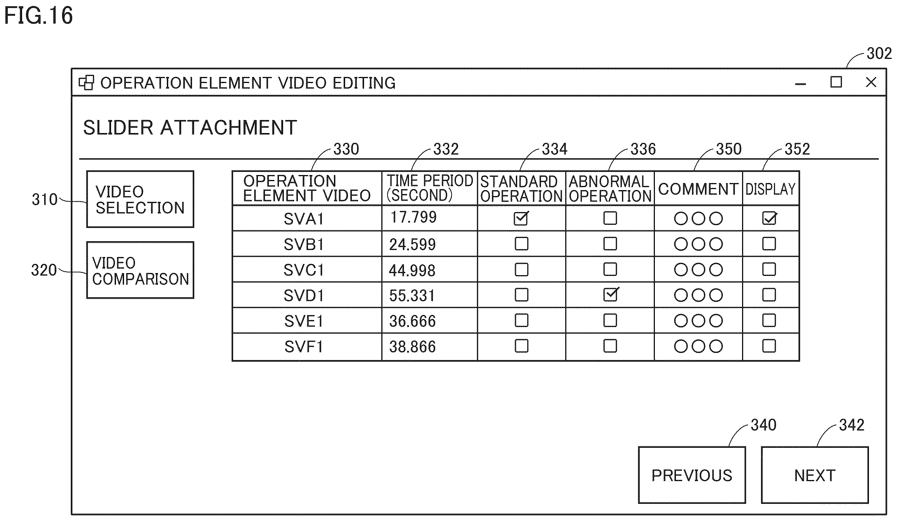

Fig. 16 illustrates an operation element video editing screen 302 according to the third embodiment. Referring to Fig. 16, processor 101# causes the not-shown display of terminal 50 connected through the network to display operation element video editing screen 302 in accordance with operation assistance video generation program 131 in response to a predetermined operational instruction. Operation element video editing screen 302 is different from operation element video editing screen 301 in that a comment addition field 350 and a display checkbox 352 are provided to correspond to each of operation element videos SVA1 to SVF1. Comment addition field 350 is for adding the comment that supports the operation process, together with the operation element video. Display checkbox 352 is for switching between display and non-display of the comment information added to comment addition field 350. The comment information is displayed when display checkbox 352 is checked, and the comment information is not displayed when display checkbox 352 is unchecked. For example, even when it is initially desirable to display the comment information, the display may become unnecessary later. By unchecking display checkbox 352 when the display of the comment information becomes unnecessary, switching between display and non-display can be performed.

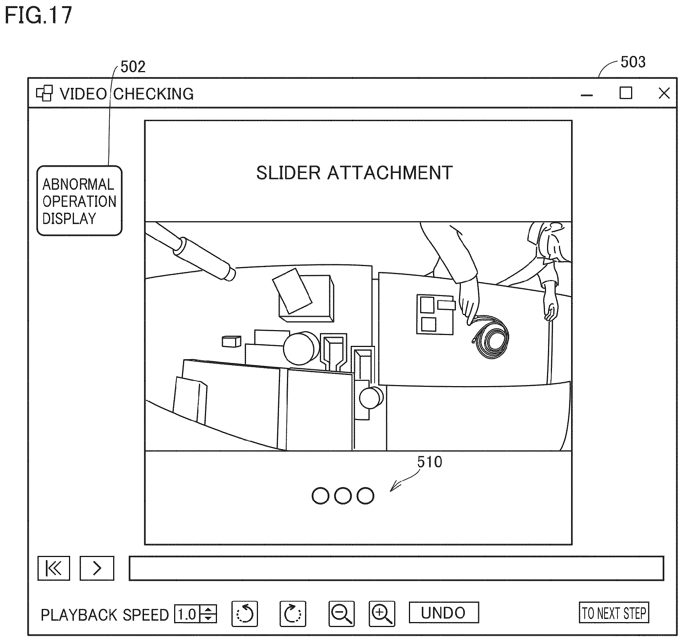

Fig. 17 illustrates a playback screen 503 according to the third embodiment. Referring to Fig. 17, server 20 causes display 10 to play back and display operation assistance video 123 in accordance with playback program 132.

Operation assistance video 123 combined based on the operation element determination list is displayed on playback screen 503. In the present example, the case in which selected operation element video SVA1 incorporated into operation assistance video 123 is displayed is described.

By watching the operation assistance video into which the operation element videos selected as the standard operations are incorporated, the operator can check the suitable video for operation assistance and efficiently perform the operation. Furthermore, in the present example, the case in which display checkbox 352 is checked and thus comment information 510 added to comment addition field 350 is displayed together with the operation element video is described.

Comment display switching unit 125 switches display of the comment based on the presence or absence of a check flag in display checkbox 352 added to the operation element video. Since the remaining configuration is the same, detailed description thereof will not be repeated.

With the configuration according to the third embodiment, by watching the operation assistance video into which the operation element videos selected as the standard operations are incorporated, and also checking the comment, the operator can check the suitable video for operation assistance and efficiently perform the operation.

### (Fourth Embodiment)

In a fourth embodiment, the case of generating an operation assistance video in accordance with a skill level will be described.

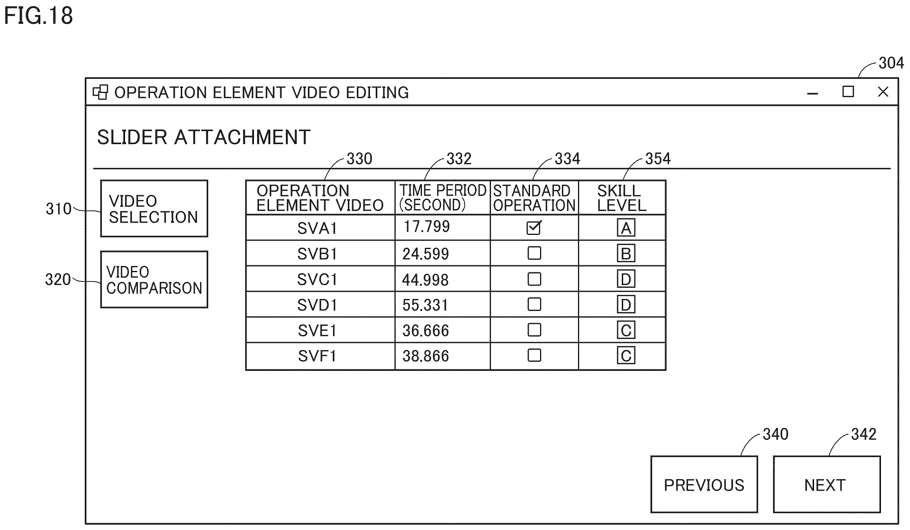

Fig. 18 illustrates an operation element video editing screen 304 according to the fourth embodiment. Referring to Fig. 18, processor 100 causes the not-shown display of terminal 50 connected through the network to display operation element video editing screen 302 in accordance with operation assistance video generation program 131 in response to a predetermined operational instruction. Operation element video editing screen 304 is different from operation element video editing screen 300 in that a skill level field 354 is added to correspond to each of operation element videos SVA1 to SVF1.

Specifically, as an example, operation element video SVA1, the time period "17.799 s" and a skill level "A" are registered in association with one another. Similarly, operation element video SVB1, the time period "24.599 s" and a skill level "B" are registered in association with one another. Further, operation element video SVC1, the time period "44.998 s" and a skill level "D" are registered in association with one another. Further, operation element video SVD1, the time period "55.331 s" and the skill level "D" are registered in association with one another. Further, operation element video SVE1, the time period "36.666 s" and a skill level "C" are registered in association with one another. Further, operation element video SVF1, the time period "38.866 s" and the skill level "C" are registered in association with one another. In the present example, the case in which the skill level "A" represents high operation efficiency and the skill level "D" represents low operation efficiency is described as an example.

For example, as described above, comparison unit 114 may calculate a skill level based on a result of analysis of the operation element videos in accordance with the time periods of the plurality of operation element videos and display the calculated skill level on operation element video editing screen 304.

Alternatively, the manager may freely edit the skill level using the not-shown mouse or the like. For example, the manager may compare and play back the plurality of operation element videos using comparison unit 114 and register the skill level based on a result of comparison.

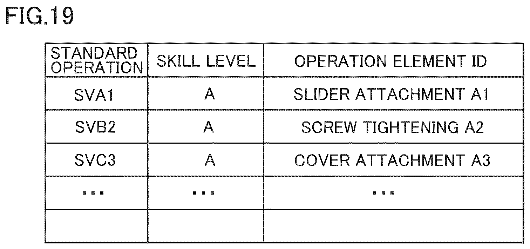

Fig. 19 illustrates an operation element determination list according to the fourth embodiment. Referring to Fig. 19, the operation element determination list is created by selecting video selection button 310 on the operation element video editing screen in relation to each element. In the present example, the case in which operation element video selection unit 111 selects one of the plurality of operation element videos for each operation element in accordance with the skill level "A" is described as an example.

Specifically, the operation element video selected as the standard operation, the skill level, and the operation element ID are registered in association with one another.

Operation element video SVA1 selected as the standard operation, the skill level "A", and slider attachment A1 are registered in association with one another. Similarly, operation element video SVB2 selected as the standard operation, the skill level "A", and screw tightening A2 are registered in association with one another. Similarly, operation element video SVC3 selected as the standard operation, the skill level "A", and cover attachment A3 are registered in association with one another.

Operation assistance video generation unit 113 generates operation assistance video 123 based on the operation element determination list.

According to this method, the operation assistance video can be created in accordance with the operator's skill level for operation assistance. For example, even if an expert (experienced person) and a beginner perform an operation at the same operation site, an operation assistance video for a high skill level can be generated and played back when the expert (experienced person) performs the operation, which makes it possible to support the highly-efficient operation.

When the beginner performs the operation, an operation assistance video for a suitable skill level can be generated and played back, which makes it possible to support the operation with stable quality. Further, the operation assistance video may be regenerated in order to further improve the operation speed in accordance with the skill level.

The methods according to the above-described embodiments can be combined as desired. For example, the comment may not be displayed for the expert (experienced person), and the comment may be displayed for the beginner to support the operation.

Specifically, skill level field 354 may be provided on operation element video editing screen 302 described in the third embodiment such that the comment can be added in accordance with the skill level of the operator. Further, the number of comments is not limited to one and a plurality of comments may be added. Display checkbox 352 may be provided for each comment to switch between display and non-display.

The method according to the present embodiment makes it possible to efficiently collect tacit knowledge such as tips and know-how about the operation process, and appropriately reflect the tacit knowledge such as tips and know-how in the operation assistance video and provide the tacit knowledge to the operator. For example, by generating and playing back the operation assistance video in accordance with the skill level of the operator, efficient operation assistance tailored to individual needs of operators can be achieved.

Although the embodiments of the present disclosure have been described, it should be understood that the embodiments disclosed herein are illustrative and non-restrictive in every respect. The scope of the present disclosure is defined by the terms of the claims, and is intended to include any modifications within the scope and meaning equivalent to the terms of the claims.

## Claims

1. An operation assistance system comprising:
an operation video acquisition unit (110) configured to acquire a plurality of operation videos about an operation process of an operator;
an operation element division unit (112) configured to divide each of the plurality of acquired operation videos into a plurality of operation element videos for each operation element included in the operation process;
an operation element video selection unit (111) configured to select one of the plurality of divided operation element videos for each operation element; and
an operation assistance video generation unit (113) configured to combine the selected operation element videos for the respective operation elements and generate an operation assistance video for the operation process.

2. The operation assistance system according to claim 1, further comprising
a comparison unit (114) configured to compare the plurality of divided operation element videos for each operation element.

3. The operation assistance system according to claim 2, wherein
the operation element video selection unit is configured to select one of the plurality of operation element videos based on a result of comparison by the comparison unit.

4. The operation assistance system according to claim 3, wherein
the operation element video selection unit includes an acceptance unit (115) configured to accept selection of one of the plurality of operation element videos based on the result of comparison by the comparison unit.

5. The operation assistance system according to any one of claims 2 to 4, wherein
the comparison unit is configured to play back and compare the plurality of divided operation element videos for each operation element.

6. The operation assistance system according to claim 5, wherein
the comparison unit is configured to simultaneously play back and compare the plurality of divided operation element videos for each operation element.

7. The operation assistance system according to any one of claims 1 to 6, wherein
the operation video and a skill level of the operator are associated with each other, and
the operation element video selection unit is configured to select one of the plurality of operation element videos in accordance with the skill level.

8. The operation assistance system according to any one of claims 1 to 7, further comprising
a comment addition unit (120) configured to add a comment to the divided operation element video.

9. The operation assistance system according to claim 8, wherein
the comment addition unit is provided to be capable of adding a plurality of comments in accordance with a skill level of the operator, and
the comment addition unit further includes a comment display switching unit (125) configured to be capable of switching between display and non-display of each of the comments in the operation element video.

10. The operation assistance system according to any one of claims 1 to 9, wherein
the operation element video selection unit includes a selection acceptance unit (115) provided to be capable of accepting selection of one of the plurality of operation element videos.

11. The operation assistance system according to claim 10, wherein
the operation element video selection unit further includes a switching selection acceptance unit (118) provided to be capable of accepting selection of an operation element video for switching, of the plurality of operation element videos.

12. The operation assistance system according to claim 11, further comprising:
a video playback unit (117) configured to play back the operation assistance video; and
a switching playback unit (119) configured to switch to and play back the operation element video for switching selected by the switching selection acceptance unit, in accordance with an instruction, when the operation assistance video is played back.

13. An operation assistance method comprising:
acquiring a plurality of operation videos about an operation process of an operator (S2);
dividing each of the plurality of acquired operation videos into a plurality of operation element videos for each operation element included in the operation process (S6);
selecting one of the plurality of divided operation element videos for each operation element (S8); and
combining the selected operation element videos for the respective operation elements and generating an operation assistance video for the operation process (S10).

14. An operation assistance program that causes a computer to perform an operation assistance method, the operation assistance program comprising:
acquiring a plurality of operation videos about an operation process of an operator (S2);
dividing each of the plurality of acquired operation videos into a plurality of operation element videos for each operation element included in the operation process (S6);
selecting one of the plurality of divided operation element videos for each operation element (S8); and
combining the selected operation element videos for the respective operation elements and generating an operation assistance video for the operation process (S10).
